# EUROPÄISCHE PATENTSCHRIFT

(11) **EP 1 182 419 B1**
(45) Veröffentlichungstag und Bekanntmachung des Hinweises auf die Patenterteilung: **12.09.2007**
(21) Anmeldenummer: 01116296.3
(22) Anmeldetag: 05.07.2001
(51) Int. Cl.: F41G 1/30

(54) **Spiegelvisier**
Reflecting sight
Appareil de visée à réflection

(30) Priorität: 26.07.2000 DE 10036303; 20.09.2000 DE 10046878
(43) Veröffentlichungstag der Anmeldung: 27.02.2002
(73) Patentinhaber: Carl Zeiss Optronics Wetzlar GmbH, 35576 Wetzlar (DE)
(72) Erfinder: Schlierbach, Armin, 35638 Leun Bsb. (DE); Weidemann, Uwe, 35753 Greifenstein (DE)
(74) Vertreter: Schultz, Jörg Martin

(56) Entgegenhaltungen:
- FR-A- 1 254 637
- FR-A- 2 608 748
- GB-A- 2 120 381
- GB-A- 2 292 465

## Beschreibung

Die Erfindung betrifft ein Reflexvisier gemäß dem Oberbegriff des Patentanspruchs 1.

Aus der EP 651 225 A1 und der EP 018 449 A1 sind ein Reflexvisier bekannt, die eine objektseitig angeordnete Linse aufweisen, die mit einer teilreflektierenden Schicht versehen ist. Zumindestens diese die teilreflektierende Schicht tragende Linse ist unter einem Kippwinkel zur optischen Achse angeordnet. Aufgrund dieser gekippten Anordnung des objektseitig angeordneten Linsensystems resultieren Abbildungsfehler. Diese Abbildungsfehler treten für den Benutzer bei Betrachtung seines Zielobjektes durch das Reflexvisier negativ in Erscheinung.

Aus der EP 431 097 B1 ist eine mit einer Zielvorrichtung ausgerüstete Handfeuerwaffe bekannt. Bei dieser Handfeuerwaffe wird ein Lichtstrahl auf das Zielobjekt gerichtet, wobei der Lichtstrahl parallel zum Waffenlauf angeordnet ist und durch eine Laserdiode erzeugt wird. Der Lichtstrahl wird mittels eines Lichtleiters, der endseitig mit einer Kollimatorlinse versehen ist, eingekoppelt.

FR-A-1 254 637 und FR-A-2 608 748 offenbaren jeweils ein Reflexvisier mit einer objektseitig angeordneten Linse, die eine teilreflektierende Schicht trägt, wobei die die teilreflektierende Schicht tragende Linse senkrecht zur Mittenachse des Reflexvisiers angeordnet ist. An der teilreflektierenden Schicht wird ein Lichtstrahl reflektiert. Diese Reflexvisiere sind ohne Lichtquelle ausgerüstet. Aus diesen Dokumenten ist ein Reflexvisier bekannt, wobei alle Merkmale des Oberbegriffs des Anspruchs 1 beschrieben sind. GB-A-2 292 465 offenbart ein Visier mit einer Lichtquelle, die im Randbereich bzw. unterhalb einer Linse angeordnet ist, wobei der Benutzer ein Objekt durch den oberen Randbereich der Linse betrachten kann. US-A-5 189 555 offenbart ein Visier mit einer elektrisch betreibbaren Lichtquelle, wobei zur Bereitstellung elektrischer Energie eine Solarzelle vorgesehen ist.

Der Erfindung liegt die Aufgabe zugrunde, ein Reflexvisier mit einer verbesserten Abbildungsqualität bereitzustellen.

Weiterhin lag der Erfindung die Aufgabe zugrunde ein Reflexvisier bereitzustellen, das bei unerwartetem Einsatz betriebsbereit ist.

Es hat sich als vorteilhaft herausgestellt eine Lichtquelle auf der Mittenachse anzuordnen, wobei der Lichtstrahl zur Bereitstellung einer Visiermarkierung von dieser Lichtquelle ausgeht.

Die der Erfindung zugrundeliegenden Aufgaben werden durch die Merkmale der Patentansprüche 1 und 10 gelöst.

Durch die Maßnahme die die teilreflektierende Schicht tragende Linse senkrecht zur Mittenachse des Reflexvisiers anzuordnen, werden die Abbildungsfehler, die durch die winklige Anordnung zur senkrechten der Mittenachse des Reflexvisiers zurückgehen, vermieden.

Es hat sich als vorteilhaft herausgestellt, die Visiermarkierung durch einen Lichtstrahl bereitzustellen, der an der teilreflektierenden Schicht in das Auge des Benutzers zurückreflektiert wird, wobei sich der Lichtstrahl entlang einer Achse ausbreitet, die mit der Mittenachse zusammenfällt.

Es hat sich als vorteilhaft herausgestellt, eine LED als Lichtquelle zu verwenden. In einem vorteilhaften Ausführungsbeispiel ist die Lichtquelle auf einem transparenten Träger angeordnet, der vorzugsweise das Reflexvisier auf der dem Benutzer zugeordneten Seite abschließt.

Es hat sich als vorteilhaft herausgestellt, die elektrischen Zuleitungen zur Lichtquelle derart dünn auszugestalten, daß sie bei Benutzung für den Benutzer nicht sichtbar in Erscheinung treten.

Es hat sich als vorteilhaft herausgestellt, am Randbereich des Trägerelementes Kontaktflächen auszubilden, die über die Leitungen mit der Lichtquelle verbunden sind.

Es hat sich als vorteilhaft herausgestellt das Reflexvisier mit einer Solarzelle zu versehen, durch die mindestens die für den Betrieb der Lichtquelle erforderliche Energie bereitgestellt werden kann. Durch Vorsehen der Solarzelle ist das Reflexvisier bei ausreichenden Lichtverhältnissen, die einen Schußwechsel zulassen, stets betriebsbereit.

Es kann vorgesehen sein, der Solarzelle einen Energiespeicher, auch mit Akku bezeichnet, zuzuordnen, der in Zeiten in denen mehr elektrische Energie als zum Betrieb der Lichtquelle erforderlich ist, durch die Solarzelle mit elektrischer Energie aufgeladen wird und der in Zeiten der Dämmerung oder wenn der Schütze sich im Schatten positioniert hat, beim Betrieb des Reflexvisiers entladen wird.

Es hat sich als vorteilhaft herausgestellt die Solarzelle oder auch Batterie mit einem Strommesser zu versehen, so daß die Lichtintensität detektiert werden kann. Wird ein vorbestimmter Grenzwert unterschritten, so kann vorgesehen sein, die Lichtquelle des Reflexvisiers auszuschalten, um Energie zu sparen. Der Grenzwert ist vorzugsweise so gewählt, daß bei derartigen Lichtverhältnissen ein Zielen nicht mehr möglich ist. Bei derartigen Ausführungen hat sich das Vorsehen eines Betätigungselementes als vorteilhaft herausgestellt, durch das die Lichtquelle des Reflexvisiers entgegen der vorgesehenen Steuerung ein oder ausgeschaltet werden kann. Damit kann dann auch ein in Dunkelheit liegender Schütze auch bei unterschrittenem Grenzwert das Reflexvisier in Betrieb nehmen.

Anhand des folgenden Ausführungsbeispiels wird die Erfindung näher beschrieben.

Es zeigt:
- Figur 1:: Längsschnitt durch ein Reflexvisier;
- Figur 2:: Trägerelement; und
- Figur 3:: Reflexvisier mit Solarzelle

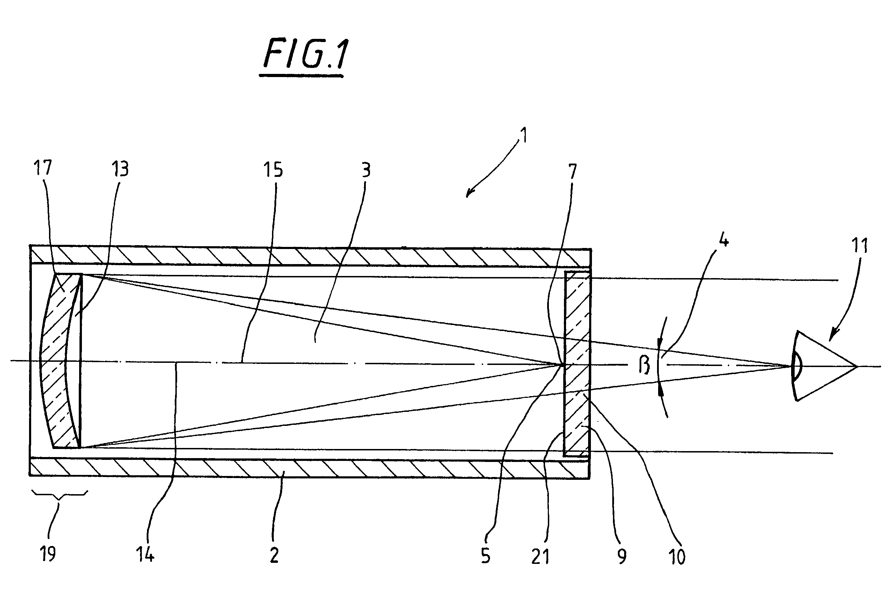

Anhand von Figur 1 wird der Aufbau des Reflexvisiers beschrieben. Das Reflexvisier umfaßt ein Gehäuse 2 in dem ein objektseitig angeordnetes Linsensystem 19, hier eine Linse 17, gelagert ist. Auf der dem Benutzer zugewandten Seite des Reflexvisiers 1 ist ein Trägerelement 9 aus transparentem Material angeordnet. Durch dieses Trägerelement 9 wird eine Lichtquelle 5, hier eine LED 7, gelagert. Anstelle der Lichtquelle könnte auch ein Lichtleiter vorgesehen sein, von dem ein entlang der Mittenachse ausgerichteter Lichtstrahl ausgeht.

Der von der Lichtquelle ausgehende Lichtstrahl breitet sich entlang einer Achse 14 aus, die mit der Mittenachse 15 des Reflexvisiers 1 zusammenfällt. Der Lichtstrahl trifft auf die teilreflektierende Schicht 13 und wird durch die teilreflektierende Schicht in das Auge 11 des Benutzers reflektiert. Das an der teilreflektierenden Schicht 13 reflektierte Licht wird mit dem in das Reflexvisier einfallende Licht überlagert. Für den Benutzer wird eine im unendlichen scharf abgebildete Visiermarkierung, die innerhalb seines Sehfeldwinkels 4 liegt, sichtbar.

In dem dargestellten Ausführungsbeispiel ist das Trägerelement als planparallele Platte ausgebildet. Es könnte jedoch auch ein optisches Element, wie eine Linse, vorgesehen sein.

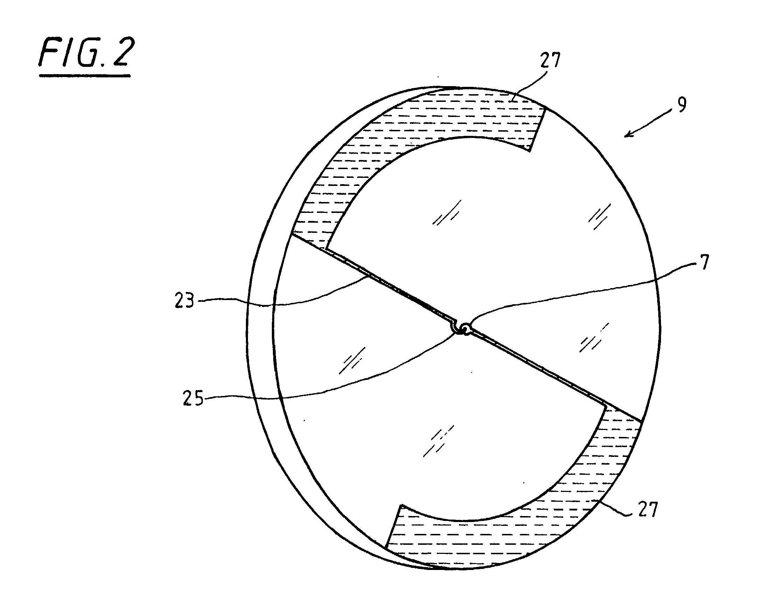

In Figur 2 ist die Ausgestaltung des Trägerelementes näher dargestellt. In der Mitte des Trägerelementes 9 ist eine LED 7 angeordnet, die mittels einem Bonddraht 25 und über die elektrischen Leitungen 23 mit Kontaktflächen 27, die in einem radialen Randbereich des Trägerelementes 9 angeordnet sind, verbunden. Die elektrischen Leitungen sind derart dünn ausgestaltet, daß sie bei Benutzung für den Benutzer nicht sichtbar in Erscheinung treten.

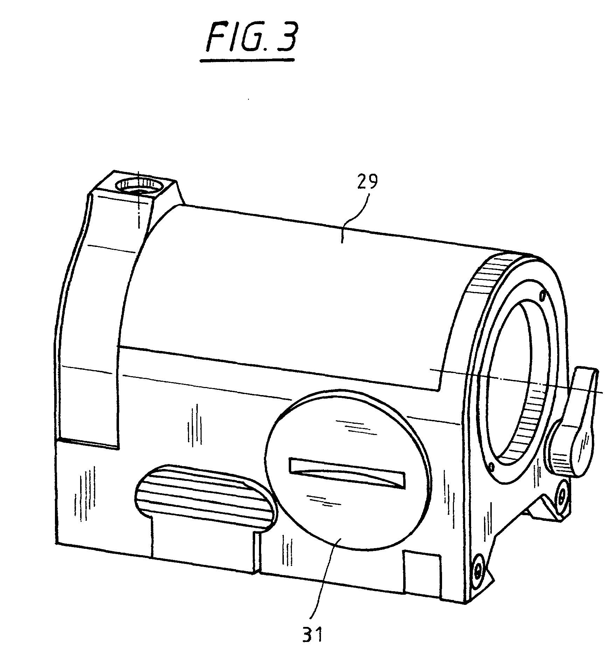

In Figur 3 ist eine Vieranordnung gezeigt, die eine Solarzelle 29 aufweist. Darüber hinaus weist diese Anordnung eine Batterie auf, die hinter dem Deckel 31 angeordnet ist, auf.

### Bezugszeichenliste:

- 1: Reflexvisier
- 2: Gehäuse
- 3: Lichtstrahl
- 4: Sehfeldwinkel
- 5: Lichtquelle
- 7: LED
- 9: Trägerelement
- 10: Trägerplatte
- 11: Auge des Benutzers
- 13: teilreflektierende Platte
- 14: Achse
- 15: Mittenachse des Reflexvisiers
- 17: Linse
- 19: Objektseitiges Linsensystem
- 21: Benutzerseitig angeordnetes optisches Element
- 23: Elektrische Leitung
- 25: Bonddraht
- 26: Kontaktfläche
- 29: Solarzelle
- 31: Energiespeicher/Batterie

## Patentansprüche

1. Reflexvisier mit mindestens einer objektseitig angeordneten Linse, die eine teilreflektierende Schicht trägt, wobei die die teilreflektierende Schicht tragende Linse senkrecht zur Mittenachse des Reflexvisiers angeordnet ist, **dadurch gekennzeichnet, dass** eine Lichtquelle auf der Mittenachse angeordnet ist.

2. Reflexvisier nach Anspruch 1, **dadurch gekennzeichnet, dass** an der teilreflektierenden Schicht ein Lichtstrahl reflektiert wird, der sich entlang einer Achse ausbreitet, die mit der Mittenachse zusammenfällt.

3. Reflexvisier nach einem der vorangegangenen Ansprüche, **dadurch gekennzeichnet, dass** als Lichtquelle eine LED vorgesehen ist.

4. Reflexvisier nach Anspruch 2 oder 3, **dadurch gekennzeichnet, dass** die Lichtquelle durch ein Trägerelement aus transparentem Material gelagert ist.

5. Reflexvisier nach Anspruch 2 oder 4, **dadurch gekennzeichnet, dass** die Lichtquelle über elektrische Leitungen mit Strom beaufschlagbar ist, wobei die Leitungen so dünn ausgestaltet sind, dass sie bei Benutzung für den Benutzer nicht sichtbar in Erscheinung treten.

6. Reflexvisier nach Anspruch 5, **dadurch gekennzeichnet, dass** das Trägerelement an einem Randbereich mit Kontaktfläche versehen ist.

7. Reflexvisier nach Anspruch 1, **dadurch gekennzeichnet, dass** zur Einkopplung des Lichtstrahls ein Lichtleiter verwendet wird.

8. Reflexvisier nach einem der Ansprüche 1-7, **dadurch gekennzeichnet, dass** die Lichtquelle als elektrisch betreibbare Lichtquelle ausgebildet ist und zur Bereitstellung der elektrischen Energie eine Solarzelle (29) vorgesehen ist.

9. Reflexvisier nach Anspruch 8, **dadurch gekennzeichnet, dass** der Solarzelle ein Energiespeicher zugeordnet ist, um eine Betriebsfähigkeit auch bei ungenügenden Lichtverhältnissen gewährleisten zu können.

10. Reflexvisier nach Anspruch 8 oder Anspruch 9, **dadurch gekennzeichnet, dass** die Solarzelle mit einem Strommesser zur Detektion der Helligkeit versehen ist, wobei bei Überschreiten einer Mindesthelligkeit das Reflexvisier in Betrieb ist.

## Claims

1. Reflecting sight having at least one lens which is arranged on the object side and bears a partially reflecting layer, the lens bearing the partially reflecting layer being arranged perpendicular to the centre axis of the reflecting sight , **characterized in that** a light source is arranged on the centre axis.

2. Reflecting sight according to Claim 1, **characterized in that** a light beam which propagates along an axis which coincides with the centre axis is reflected at the partially reflecting layer.

3. Reflecting sight according to one of the preceding claims, **characterized in that** a LED is provided as light source.

4. Reflecting sight according to Claim 2 or 3, **characterized in that** the light source is supported by a carrier element made from transparent material.

5. Reflecting sight according to Claim 2 or 4, **characterized in that** current can be applied to the light source via electrical lines, the lines being of such thin configuration that they do not become visible to the user during use.

6. Reflecting sight according to Claim 5, **characterized in that** the carrier element is provided with a contact surface at an edge region.

7. Reflecting sight according to Claim 1, **characterized in that** a light guide is used for coupling in the light beam.

8. Reflecting sight according to one of Claims 1-7, **characterized in that** the light source is designed as an electrically operable light source, and a solar cell (29) is provided for making the electrical energy available.

9. Reflecting sight according to Claim 8, **characterized in that** the solar cell is assigned an energy store in order to be able to ensure operability even in the event of unsatisfactory lighting conditions.

10. Reflecting sight according to Claim 8 or Claim 9, **characterized in that** the solar cell is provided with an ammeter for detecting the brightness, the reflecting sight being operated in the event of overshooting of a minimum brightness.

## Revendications

1. Appareil de visée à réflexion avec au moins une lentille disposée du côté de l'objet qui porte une couche partiellement réfléchissante , la lentille portant la couche partiellement réfléchissante étant disposée perpendiculairement à l'axe central de l'appareil de visée à réflexion , **caractérisé en ce qu'**une source lumineuse est disposée sur l'axe central.

2. Appareil de visée à réflexion selon la revendication 1 , **caractérisé en ce que** sur la couche partiellement réfléchissante un rayon lumineux est réfléchi qui s'étend le long d'un axe qui coïncide avec l'axe central.

3. Appareil de visée à réflexion selon l'une des revendications précédentes , **caractérisé en ce qu'**une diode électroluminescente (DEL) est prévue en tant que source lumineuse.

4. Appareil de visée à réflexion selon la revendication 2 ou 3 , **caractérisé en ce que** la source lumineuse est logée par un élément porteur en matériau transparent.

5. Appareil de visée à réflexion selon la revendication 2 ou 4 , **caractérisé en ce que** la source lumineuse peut être alimentée en courant par des conduits électriques , les conduits étant conçus si fins que lors de l'utilisation, ils n'apparaissent pas visiblement pour l'utilisateur.

6. Appareil de visée à réflexion selon la revendication 5, **caractérisé en ce que** l'élément porteur est doté d'une surface de contact sur la zone de bordure.

7. Appareil de visée à réflexion selon la revendication 1, **caractérisé en ce qu'**on utilise un guide de lumière pour injecter le rayon lumineux.

8. Appareil de visée à réflexion selon une des revendications 1 -7, **caractérisé en ce que** la source lumineuse est constituée d'une source lumineuse électriquement exploitable et **en ce qu'**une cellule solaire (29) est prévue pour fournir l'énergie électrique.

9. Appareil de visée à réflexion selon la revendication 8 , **caractérisé en ce qu'**un accumulateur d'énergie est affecté à la cellule solaire afin de pouvoir garantir une capacité de fonctionnement même dans des conditions de lumière insuffisantes.

10. Appareil de visée à réflexion selon la revendication 8 ou la revendication 9 , **caractérisé en ce que** la cellule solaire est dotée d'un ampèremètre pour détecter la luminosité, l'appareil de visée à réflexion étant de ce fait mis en service en cas de dépassement d'une luminosité minimale.
